# FASCICULE DE BREVET EUROPEEN

(11) **EP 1 192 537 B1**
(45) Date de publication et mention de la délivrance du brevet: **02.01.2003**
(21) Numéro de dépôt: 00937002.4
(22) Date de dépôt: 02.06.2000
(51) Int. Cl.: G06F 9/45

(54) **MIGRATION DE DIFFERENTS LANGAGES SOURCES VERS UN SUPPORT D'EXECUTION**
MIGRATION VON UNTERSCHIEDLICHEN QUELLSPRACHEN ZU EINER AUSFÜHRUNGSUMGEBUNG
MIGRATION OF DIFFERENT SOURCE LANGUAGES TO AN EXECUTING MEDIUM

(30) Priorité: 04.06.1999 FR 9907239
(43) Date de publication de la demande: 03.04.2002
(73) Titulaire: Gemplus, 13881 Gémenos Cedex (FR)
(72) Inventeur: GRIMAUD, Gilles, F-59800 Lille (FR); VANDEWALLE, Jean-Jacques, F-13001 Marseille (FR)
(86) Numéro de dépôt international: FR0001528
(87) Numéro de publication internationale: WO00075776

(56) Documents cités:
- BERTIL FOLLIOT, IAN PIUMARTA, FABIO RICCARDI: "Virtual Virtual Machines" PROCEEDINGS OF THE 4TH CABERNET RADICAL WORKSHOP, [en ligne] 17 - 20 septembre 1997, XP002135231 Rethimnon, Crete Extrait de l'Internet: <URL:http://www-sor.inria.fr/cgi-bin/go?ur l=ftp://ftp.inria.fr/INRIA/Projects/SOR/pa pers/1997/VVM_radical97.ps.gz> [extrait le 2000-04-10]
- BERTIL FOLLIOT, IAN PIUMARTA, FABIO RICCARDI: "A Dynamically Configurable, Multi-Language Execution Platform" SIGOPS'98 WORKSHOP, [en ligne] 1998, XP002135232 Extrait de l'Internet: <URL:http://www-sor.inria.fr/cgi-bin/go?ur l=ftp://ftp.inria.fr/INRIA/Projects/SOR/pa pers/1998/DCMEP_sigops98.ps.gz> [extrait le 2000-04-10]
- DAVID MAY: "VIRTUAL BINARY EASES PROGRAM RECOMPILATION" NEW ELECTRONICS, vol. 26, no. 7, juillet 1993 (1993-07), page 23 XP000384613 INTERNATIONAL THOMSON PUBLISHING, LONDON, GB ISSN: 0047-9624
- JEAN-JACQUES VANDEWALLE, RIC V TILLARD: "Developing Smart Card-Based Application using Java Card" PROCEEDINGS OF THE THIRD SMART CARD RESEARCH AND ADVANCED APPLICATION CONFERENCE, (CARDIS'98), LOUVAIN-LA-NEUVE, BELGIUM, [en ligne] août 1998 (1998-08), XP002135233 Louvain-la-Neuve, Belgium Extrait de l'Internet: <URL:http://www.gemplus.fr/smart/r_d/publi cations/download/cardis/cardis0998-javacar d-paper.pdf> [extrait le 2000-04-10]
- CARINE BAILLARGUET: "Support d'applications sur une système d'exploitation adaptatif et spécialisable" RAPPORT DE STAGE DE DEA, [en ligne] septembre 1998 (1998-09), XP002135234 Université Pierre & Marie Curie, Paris, FR Extrait de l'Internet: <URL:http://www-sor.inria.fr/~baillarg/doc s/mvv-rs.ps.gz> [extrait le 2000-04-10]

## Description

L'invention concerne les cartes à puce, dites également cartes à microprocesseur, et plus généralement des moyens de traitement de données ouverts programmables à microprocesseur pouvant être chargés par des applications écrites dans des langages de programmation évolués.

L'invention est plus particulièrement dirigée vers l'hétérogénéité de ces différents langages qui ne permet pas d'écrire une application dans un langage particulier et de la faire exécuter par n'importe quel moyen de traitement de données programmable ; l'invention est par conséquent dirigée également vers l'ouverture de moyens de traitement de données. L'invention concerne l'interopérabilité d'applications écrites pour des moyens de traitement de données programmables, telles que JAVA Card, WINDOWS for SMART Card, MultOS (marque déposée), etc. L'interopérabilité est assortie d'exigences en-terme de sécurité.

Dans le domaine des cartes à puce programmables, chaque langage source de programmation utilisé pour écrire une application destinée à être chargée dans une carte est fortement lié à un support d'exécution particulier généralement ayant un caractère logiciel, comme une machine virtuelle, mais aussi ayant un caractère matériel, comme un microprocesseur.

Pour pouvoir charger un programme dans une carte à puce, le programme écrit dans un langage source donné est compilé, puis est chargé dans la carte à puce spécialement destinée à accueillir des programmes écrits dans le langage source donné. La carte reçoit le programme compilé et l'exécute au moyen d'un support d'exécution spécialement dédié à l'exécution de programmes initialement écrits dans le langage source donné.

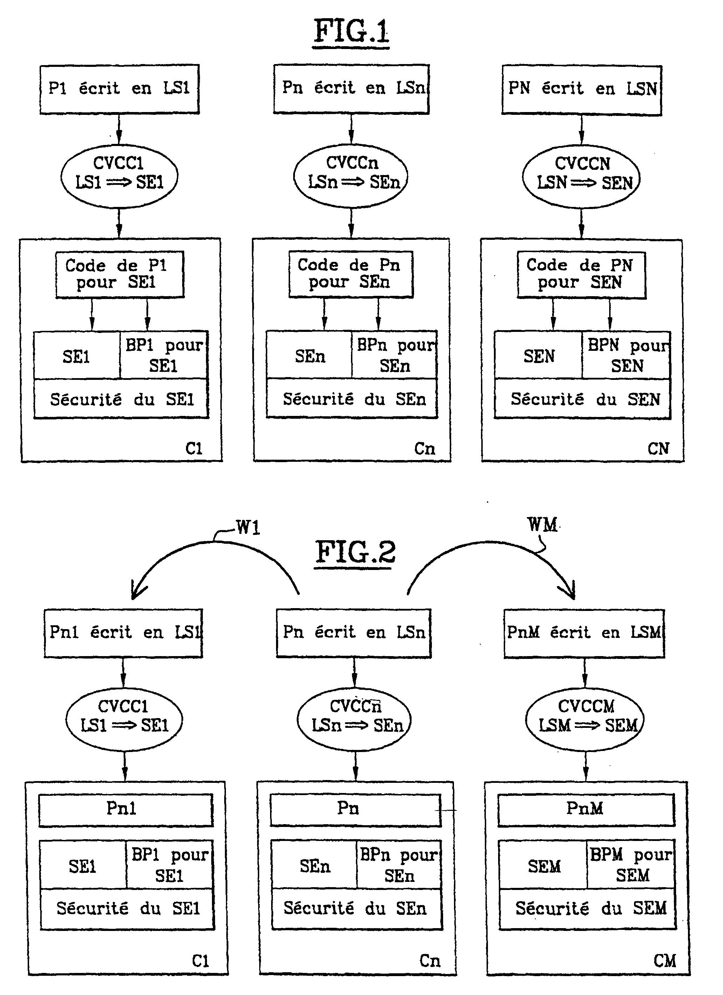

Comme montré à la figure 1, des cartes à puce Cn contenant chacune un support d'exécution respectif SEn différents de ceux SE1 à SEN d'autres cartes à puce C1 à CN, avec l'entier n compris 1 et un nombre entier N grand désignant un nombre prédéterminé de langages sources LS1 à LSN, ne peuvent exécuter des programmes applicatifs Pn que si elles sont programmées dans le langage source respectif LSn. Préalablement à la compilation du programme à charger, celui-ci subit une vérification de code pour contrôler que le programme à charger n'enfreint pas des propriétés de sécurité fournies par le support d'exécution SEn associé au langage source LSn.

En fait dans un tel ensemble de cartes, un programme Pn développé dans un langage source LSn donné est intimement lié au support d'exécution cible SEn au motif que :
1) les structures de données et les opérations fournies par le langage source LSn sont spécialisées pour être compilées vers une représentation optimisée en taille et en vitesse pour le support d'exécution SEn dédié au langage source LSn ;
2) des bibliothèques de programmation BPn fournies avec le langage source LSn sont en général corrélées au langage source et optimisées pour le support d'exécution SEn dédié au langage source ;
3) la vérification du programme Pn avant qu'il ne soit chargé dans une carte Cn est intimement liée aux propriétés de sécurité assurées par le support d'exécution cible SEn.

Cette forte liaison entre un langage source LSn et son support d'exécution SEn se concrétise dans une chaîne de vérification, compilation et chargement CVCCn. Cette chaîne gère une transformation d'un programme Pn écrit dans un langage source de haut niveau en une forme compacte et prête à être exécutée de façon efficace par le support d'exécution SEn dédié au langage source LSn.

Le problème général à l'origine de l'invention est de lier des programmes écrits avec n'importe lequel de différents langages sources LS1 à LSN, à différents supports d'exécution SE1 à SEM, M étant un entier quelconque égal ou différent de l'entier N. Ce problème général peut être décomposé en les trois sous-problèmes suivants.

Selon le premier sous-problème SP1, il s'agit, par exemple, de faire exécuter un programme P écrit avec un langage source LSn sur un support d'exécution SEm dédié à un langage source donné LSm, avec l'indice m compris entre 1 et M.

Le deuxième sous-problème SP2 consiste à charger des programmes P1 à PN écrits respectivement avec différents langages sources LS1 à LSN dans un support d'exécution commun SEm capable d'apporter à ces différents programmes un environnement efficace en terme de taille mémoire, de rapidité d'exécution, de leurs bibliothèques de programmation BP1 à BPM et de leurs propriétés de sécurité.

Le troisième sous-problème SP3 vise à faire coexister différents programmes P1 à PN écrits respectivement en différents langages sources LS1 à LSN au sein d'un support d'exécution commun SEm. Pour le troisième sous-problème, il est recommandé de traiter la sécurité des programmes P1 à PN issus de différents environnements de programmation et placés dans sur un même support physique.

Pour la résolution des trois sous-problèmes SP1, SP2 et SP3 qui revient à résoudre l'interopérabilité de différentes applications écrites par exemple pour des cartes à puce programmables avec conservation de la sécurité et des mécanismes de protection et d'interaction, l'homme du métier pourrait envisager les trois catégories de solutions suivantes qui sont cependant peu satisfaisantes.

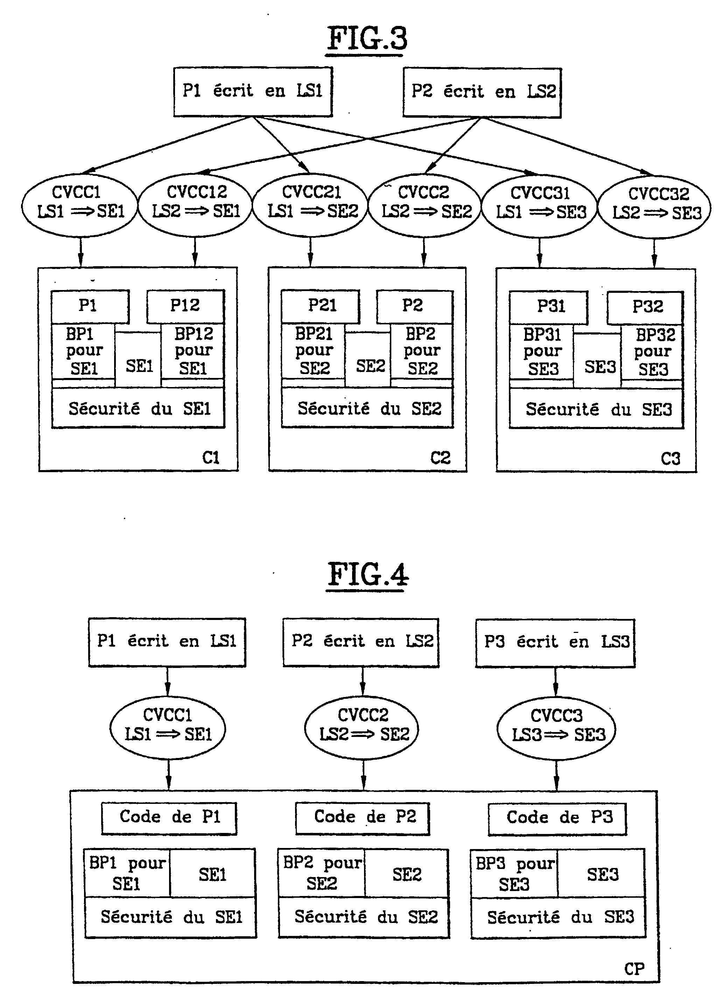

La première solution, la plus simple et la plus utilisée, consiste à réécrire un programme Pn écrit dans un langage source LSn dédié à un support d'exécution SEn implanté dans une carte à puce Cn, en des programmes Pn1 et PnM écrits respectivement par exemple en des langages sources LS1 à LSM dédiés à des supports d'exécution SE1 et SEM implantés dans des cartes à puce C1 et CM, comme indiqué par des opérations d'écriture W1 et WM dans la figure 2.

La première solution présente comme principal inconvénient une lourde et fastidieuse tâche prise en charge manuellement par un programmeur, consistant en la réécriture de l'algorithme du programme Pn en le programme Pn1, PnM qui doit être adaptée aux structures de données et bibliothèques de programmation différentes BP1, BPM pour le nouveau langage source LS1, LSM. De plus, les mécanismes de sécurité fournis par chacun des nouveaux supports d'exécution SE1 et SEM nécessitent de refaire certifier le code du programme réécrit Pn1, PnM.

La première solution ne traite uniquement que le sous-problème SP1 et ainsi ne résout que très partiellement le problème de l'interopérabilité de programmes. De plus, si un autre langage source associé à un support d'exécution autre que les supports d'exécution SE1, SEn et SEM apparaît dans une nouvelle carte, il faut reprendre tous les anciens programmes écrits dans le langage source initial LSn pour les réécrire avec ledit autre langage source.

La deuxième solution comporte une compilation croisée.

En référence à la figure 3, soit par exemple deux programmes P1 et P2 qui sont écrits en des langages sources respectifs LS1 et LS2 auxquels sont initialement dédiés deux supports d'exécution respectifs SE1 et SE2 dans deux cartes à puce C1 et C2 ; après avoir subi des compilations dans des chaînes de vérification, compilation et chargement CVCC1 et CVCC2, ils peuvent être exécutés classiquement chacun dans les supports d'exécution SE1 et SE2. Toutefois, les programmes P1 et P2 doivent être exécutés dans les supports SE2 et SE1 respectivement, et également tous les deux dans un troisième support d'exécution SE3 contenu dans une troisième carte à puce C3 et dédié à un troisième langage source LS3.

Pour exécuter le programme P1, ou P2, dans les supports d'exécution cibles SE2 et SE3, ou SE1 et SE3, autre que celui SE1, ou SE2, dédié au langage source initiale LS1, ou LS2, le programme P1, ou P2, subit des compilations dans des chaînes additionnelles de vérification, compilation et chargement CVCC21 et CVCC31, ou CVCC12 et CVCC32.

Comparativement à la première solution, la deuxième solution ne nécessite plus de la part d'un programmeur de réécrire manuellement les programmes, mais requiert la mise à disposition de très nombreuses chaînes de vérification, compilation et chargement CVCC12, CVCC21, CVCC31, CVCC32. Plus généralement, pour N langages sources LS1 à LSN et M supports d'exécution SE1 à SEM, N*M chaînes de vérification, compilation et chargement sont nécessaires. Ces chaînes impliquent par leur nombre et leur complexité un investissement matériel, logiciel et humain considérable.

Outre cet inconvénient majeur, la deuxième solution présente les inconvénients suivants :
- mauvaises performances en taille mémoire et rapidité d'exécution des programmes ainsi générés, les supports d'exécution dans lesquels ils sont exécutés n'étant pas a priori convenablement adaptés aux structures de données, opérations et bibliothèques de programmation des langages sources LS1 et LS2 utilisés pour écrire ces programmes ;
- réalisation de chaînes de vérification, compilation et chargement égal en nombre aux supports d'exécution cibles existants SE1 à SEM lorsqu'un nouveau langage source apparaît, et réciproquement égal en nombre aux langages sources existants LS1 à LSN lorsqu'un nouveau support d'exécution apparaît ;
- pour le déploiement des programmes, chargement préalable de tous les postes de téléchargement avec les programmes dotés des codes compilés et certifiés pour les différents supports d'exécution SE1 à SEM, ce qui rend la deuxième solution encore plus complexe et coûteuse.

La deuxième solution ne traite uniquement que le sous-problème SP1 mais de manière automatisée comparativement à la première solution, et ainsi ne résout que très partiellement le problème de l'interopérabilité. De plus, si un autre langage source associé à un support d'exécution autre que les supports d'exécution SE1 à SEM apparaît dans une nouvelle carte, il faut passer tous les programmes initiaux P1 à PN dans de nouvelles chaînes de vérification, compilation et chargement produisant des codes certifiés pour ledit autre support d'exécution.

La troisième solution suggère des cartes à puce CP qui contiennent chacune plusieurs supports d'exécution, par exemple trois supports d'exécution SE1, SE2 et SE3, comme montré à la figure 4. Ainsi, des programmes P1, P2 et P3 écrits respectivement avec des langages sources différents LS1, LS2 et LS3 peuvent être chargés dans la carte CP à travers des chaînes respectives de vérification, compilation et chargement CVCC1, CVCC2 et CVCC3. La carte CP apporte à chaque programme P1, P2, P3 exactement les mêmes fonctionnalités que s'il était chargé individuellement sur une carte ne comportant que le support d'exécution SE1, SE2, SE3 dédié au langage source respectif LS1, LS2, LS3.

La troisième solution conserve avantageusement à l'identique les chaînes de vérification, compilation et chargement CVCC1, CVCC2 et CVCC3 respectivement associées aux langages sources LS1, LS2 et LS3 et permet aussi de résoudre le sous-problème SP2.

Néanmoins, la troisième solution présente l'inconvénient majeur d'être actuellement d'autant plus irréalisable que le nombre de supports d'exécution différents à implanter dans la carte et représentant chacun une quantité importante de code est élevé. Cet inconvénient majeur est également présent dans les architectures de type VVM décrits dans le document « Virtual Virtual Machines » de Bertil Foliot et Ian Piumarta (septembre 1997) ou encore dans le document « A Dymically Configurable Multi-language Execution Platform » des mêmes auteurs (1998). Dans ce type d'architecture (VVM) plusieurs supports d'exécution sont présents en mémoire, supports d'exécution s'appuyant eux-mêmes sur un élément supplémentaire d'abstraction des primitives système de bas niveau. La mémoire nécessaire à ce type de solution n'est pas concevable actuellement dans une carte à puce et serait en pratique plus utilement exploitable pour mémoriser davantage de données et de programmes par exemple.

L'objectif principal de l'invention est de fournir un procédé pour exécuter automatiquement plusieurs programmes écrits dans des langages sources différents dans un unique support d'exécution, sans contraindre un programmeur à un langage source unique pour un type de support d'exécution respectif. Cet objectif principal revient à résoudre les trois sous-problèmes définis ci-dessus SP1, SP2 et SP3, c'est-à-dire l'interopérabilité des programmes en différents langages sources qu'aucune des trois solutions présentées ci-dessus ne résoud complètement.

A cette fin, le procédé de migration de plusieurs programmes écrits respectivement en des langages sources auxquels des supports d'exécution respectifs sont dédiés, vers un moyen de traitement de données, est caractérisé en ce qu'il comprend les étapes de :
- compiler chaque programme en un programme respectif exprimé en un langage intermédiaire représentatif d'un sous-ensemble minimal des langages sources,
- fournir dans le moyen de traitement de données un support d'exécution prédéterminé dédié au langage intermédiaire, et
- charger le programme respectif en langage intermédiaire dans le moyen de traitement de données avec une bibliothèque de programmation respective adaptant le langage source respectif au langage intermédiaire afin d'exécuter le programme en langage intermédiaire dans le support d'exécution prédéterminé.

L'invention repose sur la recherche d'un support d'exécution qui est initialement le plus petit dénominateur commun présent dans des supports d'exécution de moyens de traitement de données à microprocesseur prédéterminées ; par exemple les supports d'exécution sont contenus dans des cartes à puce connues de différents types, c'est-à-dire dont les programmes sont écrits en des langages sources différents. L'invention offre donc les avantages de la troisième solution présentée précédemment, suggérant de mettre dans un moyen de traitement de données à microprocesseur l'ensemble de tous les supports d'exécution possibles. Mais au lieu d'exiger une taille de mémoire considérable, voire irréalisable, l'invention n'implante qu'un support d'exécution réduit dédié à un langage intermédiaire minimal, mais flexible dans chaque moyen de traitement de données, tel que carte à puce. En temps que tel, le langage intermédiaire n'est associé à aucun langage source particulier, et sert de langage de base pour servir de cible à plusieurs langages sources. La mémoire requise pour implanter le langage intermédiaire est ainsi réduite et par conséquent l'exécution d'un programme est plus rapide que dans la troisième solution suggérée ci-dessus.

L'invention telle que definie dans les revendications met ainsi en oeuvre la combinaison :
- d'un langage intermédiaire capable de représenter aussi bien les programmes issus de différents langages que les bibliothèques de programmation et les propriétés de sécurité spécifiques nécessaires à leur bon fonctionnement, et
- d'un support d'exécution dédié au langage intermédiaire, mais capable d'être reconfiguré pour s'adapter au mieux aux exigences de chaque langage aussi bien en terme d'environnement de travail qu'en terme de contrôle de sécurité des applications.

Selon une variante de l'invention, l'étape de compiler peut comprendre les étapes de :
- compiler le programme en un programme compilé en un langage machine auquel le support d'exécution respectif est dédié, et
- convertir le programme compilé en le programme respectif exprimé en langage intermédiaire.

Cette variante peut être d'intérêt pour un développeur de programme à partir du résultat compilé d'un programme pour produire le code en langage intermédiaire. L'outil qui permet cette opération est un convertisseur. Il remplace les instructions du support d'exécution respectif associé au langage source par des opérations écrites en langage intermédiaire.

Selon un autre aspect de l'invention, le procédé peut comprendre une étape, avant l'étape de charger, pour extraire des informations de validation du programme respectif en langage intermédiaire, et une étape, après l'étape de charger, pour vérifier les informations de validation extraites dans le support d'exécution prédéterminé.

Selon une autre variante, le support d'exécution prédéterminé peut être analogue à l'un des supports d'exécution. Bien que globalement moins avantageuse que la réalisation de base de l'invention, cette variante peut être intéressante lorsque les langages sources sont des langages ayant subis des évolutions et modifications analogues.

De préférence, le langage intermédiaire est extensible, tandis que le support d'exécution prédéterminé est extensible ou non extensible. Au moins l'un des langages sources et le langage intermédiaire sont avantageusement des langages orientés objet.

En pratique, le procédé peut comprendre une étape de lire des caractéristiques du support d'exécution prédéterminé par un serveur qui ensuite effectue l'étape de compiler.

Le moyen de traitement de données est par exemple une carte à puce. La carte à puce peut être une carte d'identité d'abonné incluse dans un terminal radiotéléphonique mobile.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 déjà commentée est un diagramme de production et d'exécution de plusieurs programmes respectivement écrits en des langages sources différents pour des supports d'exécution respectifs ;
- les figures 2, 3 et 4 déjà commentées sont des diagrammes de première, deuxième et troisième solutions partielles à l'interopérabilité de programmes en langages sources différents, suggérées par la technique antérieure, respectivement ;
- la figure 5 est un diagramme de production et d'exécution de plusieurs programmes écrits en des langages sources différents pour être exécutés dans un support d'exécution dédié à un langage intermédiaire et contenu dans une carte à microprocesseur, selon une réalisation préférée de l'invention et des variantes de celle-ci ;
- la figure 6 montre des étapes de compilation et conversion d'un programme écrit en un langage connu, en un langage intermédiaire selon l'invention;
- la figure 7 est une étape de compilation d'un programme écrit en un langage connu, analogue au programme de la figure 6, directement en langage intermédiaire ;
- la figure 8 montre une étape d'adaptation d'une séquence en langage intermédiaire avant exécution selon la première réalisation ;
- les figures 9 et 10 montrent des conversions d'une séquence écrite en un langage de machine virtuelle en des séquences sans et avec extension du langage intermédiaire, respectivement ; et
- la figure 11 montre une adaptation d'une séquence en langage intermédiaire avant exécution, selon une variante de l'invention.

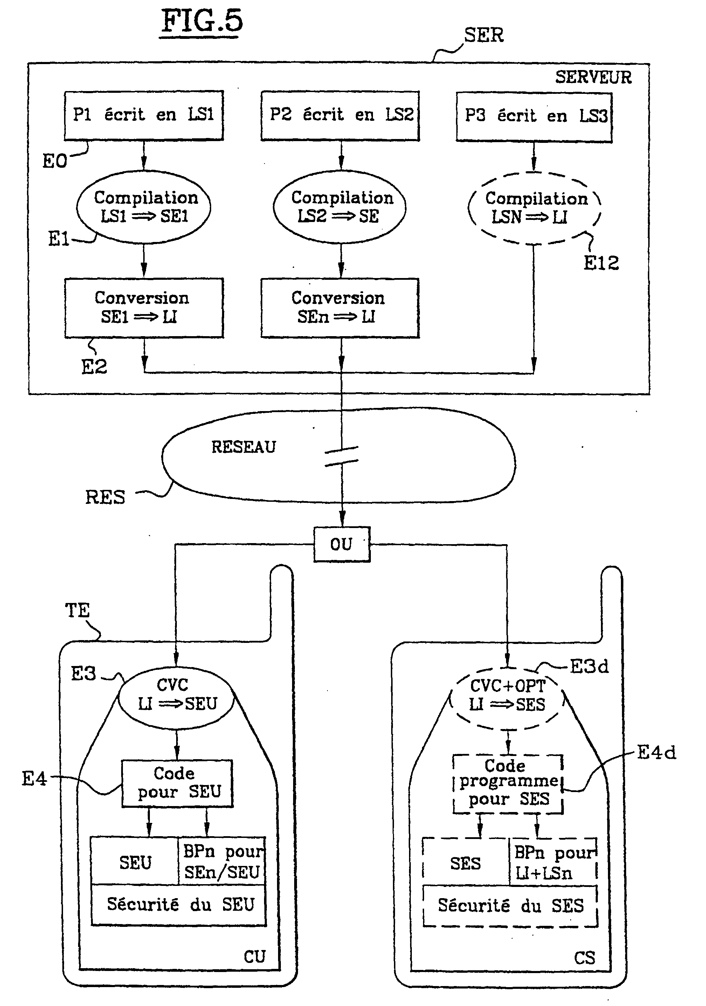

En référence à la figure 5, N programmes applicatifs P1 à PN sont susceptibles d'être écrits respectivement en des langages sources LS1 à LSN a priori différents dans un serveur d'application SER. Les langages sources sont parfois appelés "langages évolués" ou "langages de haut niveau".

Selon une réalisation préférée de l'invention, le procédé de migration a pour objectif de faire migrer n'importe lequel programme Pn écrit dans le langage source respectif LSn vers un support d'exécution universel SEU selon l'invention, contenu dans un moyen de traitement de données correspondant, tel qu'une carte à puce programmable "universelle" CU, comme défini ci-après.

Comme illustré à gauche dans la figure 5, le procédé de migration comprend essentiellement quatre étapes E1 à E4, après une étape initiale de développement et de fourniture E0 d'un programme Pn dans le langage source respectif LSn, avec 1 ≤ n ≤ N.

Les programmes P1 à PN ont été développés dans un serveur SER relié à un terminal TE contenant la carte CU à travers un réseau de télécommunications RES. Par exemple, le terminal TE est un terminal bancaire relié au serveur par des lignes louées ou spécialisées du réseau RES ; selon un autre exemple, le terminal TE est un terminal radiotéléphonique mobile de type GSM relié au serveur SER par un réseau de radiotéléphonie cellulaire numérique RES, le serveur étant relié à des commutateurs du service mobile (MSC) à travers le réseau de signalisation du réseau de radiotéléphonie, et la carte CU étant une carte d'identité d'abonné de type SIM (Subscriber Identity Module) amovible du terminal **TE.**

A **l'étape E1,** le serveur SER interroge le support d'exécution SEU dans la carte CU de manière à y lire et enregistrer des caractéristiques déjà présentes du support d'exécution. Puis le programme Pn en langage source LSn est compilé en un programme compilé PCn exprimé en un langage machine auquel est dédié le support d'exécution cible respectif SEn. Un compilateur réalisant l'étape E1 est un programme installé dans le serveur SER. Puis à **l'étape E2**, le programme compilé PCn est converti en un langage intermédiaire LI selon l'invention. Comme le compilateur, un convertisseur de langage est un programme implémenté dans le serveur SER et réalise l'étape E2.

Le **langage intermédiaire** LI possède notamment les deux propriétés suivantes :
- extensibilité : le langage LI est capable d'enrichir le champ de commandes élémentaires pour exprimer efficacement des programmes issus d'autres langages ;
- typage fort : comme il est connu, les mécanismes de sécurité du code par typage constituent le grain le plus fin possible pour un contrôle de sécurité ; les propriétés de sécurité de chaque langage sont alors spécifiées à partir du modèle initial présent dans la carte ; le langage intermédiaire LI permet un contrôle par typage extensible à la manière des types ou des classes des langages à objet.

Le langage intermédiaire LI ne contient qu'un nombre très limité d'instructions constituant un sous-ensemble minimal représentatif des langages machines des différents supports d'exécution SE1 à SEN. Une bibliothèque de programmation additionnelle est utilisée par le convertisseur de langage à l'étape E2 pour éviter que chaque opération élémentaire pour le système d'exécution SEn ne soit remplacée par un ensemble d'instructions pour le support d'exécution universel SEU. Cette précaution limite les risques d'augmentation du volume en mémoire des programmes chargés dans la carte CU.

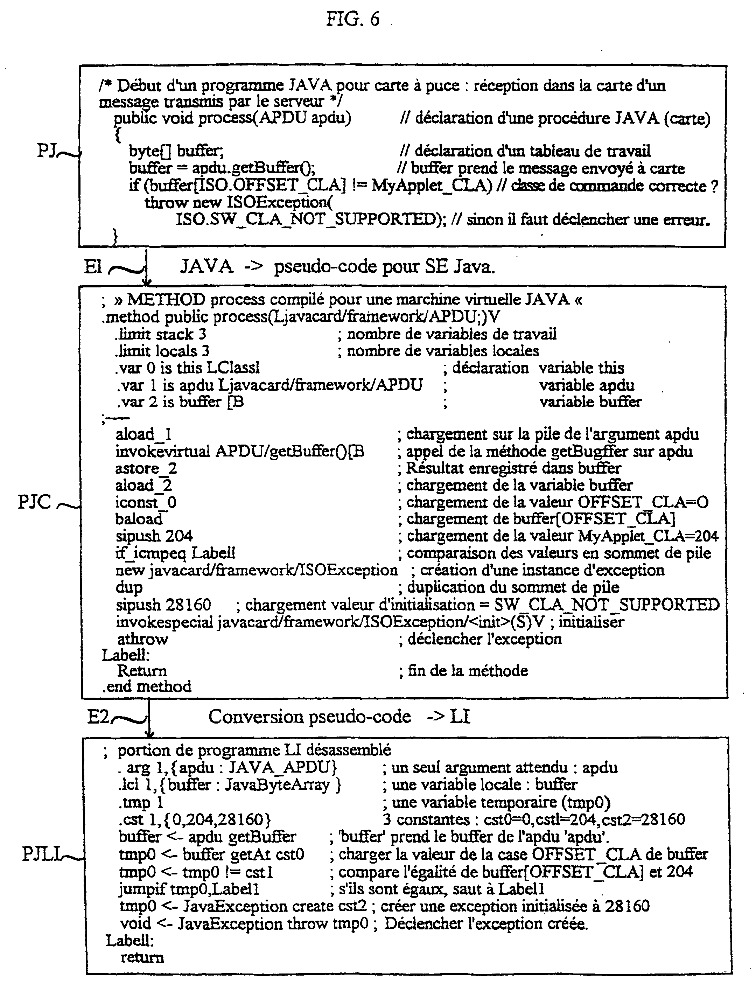

La figure 6 montre selon un premier exemple les étapes E1 et E2 pour un programme en langage source, tel qu'un segment de code PJ exprimé dans le langage source orienté objet JAVA relatif à une réception dans la carte d'un message transmis par le serveur SER.

L'étape E1 effectue classiquement la compilation du segment PJ en un programme binaire compilé PJC sous un format appelé pseudo-code (Byte Code) qui est capable de fonctionner sous un support d'exécution SEJ, c'est-à-dire un micro-ordinateur ayant implémenté le concept de la machine virtuelle JAVA. Classiquement, chaque instruction sous le langage JAVA donne naissance à plusieurs instructions du langage de la machine virtuelle.

Puis à l'étape E2, le mécanisme de la conversion ne se limite pas à une substitution instruction par instruction des pseudo-codes JAVA par des pseudo-codes du langage intermédiaire LI, mais convertit une succession d'opérations élémentaires dans le programme compilé PJC en une séquence différente PJLI en langage intermédiaire, en déterminant des arguments d'appels de fonctions par exemple. Cette conversion étant effectuée à l'extérieur de la carte CU, il est possible d'implanter des techniques d'optimisation et de transformation utilisées dans les compilateurs. La conversion à l'étape E2 garantit l'efficacité du code en langage LI transmis à la carte, quel que soit le langage source utilisé. De plus, la conversion de langage contribue à produire des éléments de preuve du bon fonctionnement du langage LI que la carte CU utilise pour contrôler la viabilité du programme ; à l'issue de l'étape E2, le convertisseur de langage fournit des informations de typage utiles à la carte pour vérifier la viabilité du programme.

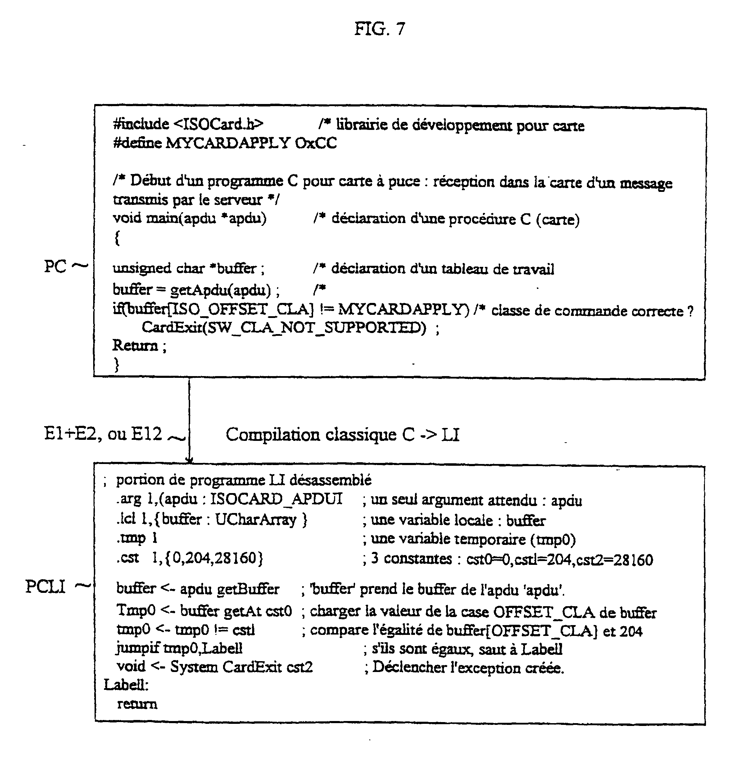

Selon un deuxième exemple, la figure 7 montre un segment de code PC exprimé dans le langage C et correspondant à une déclaration d'un tableau de travail, comme pour le segment de code PJ en langage JAVA montré à la figure 6. Après l'étape de compilation E1 pour compiler classiquement le segment PC destiné à un support d'exécution dédié au langage machine pouvant exécuter un programme en langage C, l'étape E2 convertit le segment correspondant en langage machine en une séquence PCLI exprimée dans le langage intermédiaire LI.

En langage intermédiaire LI, la séquence PCLI est identique à la séquence PJLI : elles comprennent les mêmes variables et constantes ainsi que des commandes et opérations exprimées de la même manière, excepté l'écriture du déclenchement d'une exception en fin de séquence propre au langage source initial.

Le langage intermédiaire LI selon l'invention est ainsi adaptable. Toute opération ou commande selon les exemples montrés aux figures 6 et 7 est exprimée sous la forme d'un message appliqué à un objet. Comme pour un langage connu orienté objet, de nouveaux messages dans le langage intermédiaire peuvent être définis à tout moment.

La figure 5 montre une deuxième variante de la première réalisation, illustrée en haut et à droite en trait pointillé, relative par exemple à la production du programme PN initialement exprimé dans un langage source LSN. Pour cette deuxième variante, les étapes de compilation et conversion E1 et E2 sont remplacées par une **étape** de compilation **E12** qui compile le programme PN en langage source LSN en un programme compilé directement exprimé dans le langage intermédiaire LI qui est ensuite vérifié et chargé dans la carte à puce CU à l'étape E3.

Selon l'exemple montré à la figure 7, l'étape E12 convertit directement le segment PC en langage C en la séquence PCLI en langage LI.

Ensuite, en revenant à **l'étape E3** dans la figure 5, le programme exprimé en langage intermédiaire LI suit une chaîne de vérification et chargement CVC afin qu'il soit vérifié et téléchargé dans la carte à puce cible CU. La chaîne CVC est au moins en partie et de préférence totalement installée dans la carte CU. L'autre partie de la chaîne CVC concerne notamment la vérification dynamique de l'exécution du programme en langage intermédiaire et est installée soit dans le serveur SER, soit dans un terminal TE recevant la carte.

Un mécanisme de vérification et/ou d'adaptation dans la carte CU à l'étape E3 transforme le code reçu dans la carte et exprimé en langage intermédiaire LI sous la forme d'un programme binaire directement exécutable dans le langage intermédiaire. Des informations de validité du programme en langage intermédiaire, relatives notamment à la sécurité, au typage et au confinement, peuvent être extraites du programme et établies dans le terminal TE lors de l'étape E3 et vérifiées par la carte après le chargement du programme dans la carte. Si la vérification échoue, le programme est invalidé. Cette vérification assure l'efficacité de l'environnement dans lequel le programme est utilisé, en accord avec le sous-problème SP2.

Les transformations effectuées lors du chargement à l'étape E3 peuvent être minimes et être réduites à un mécanisme d'édition de lien propre au milieu des cartes à puce.

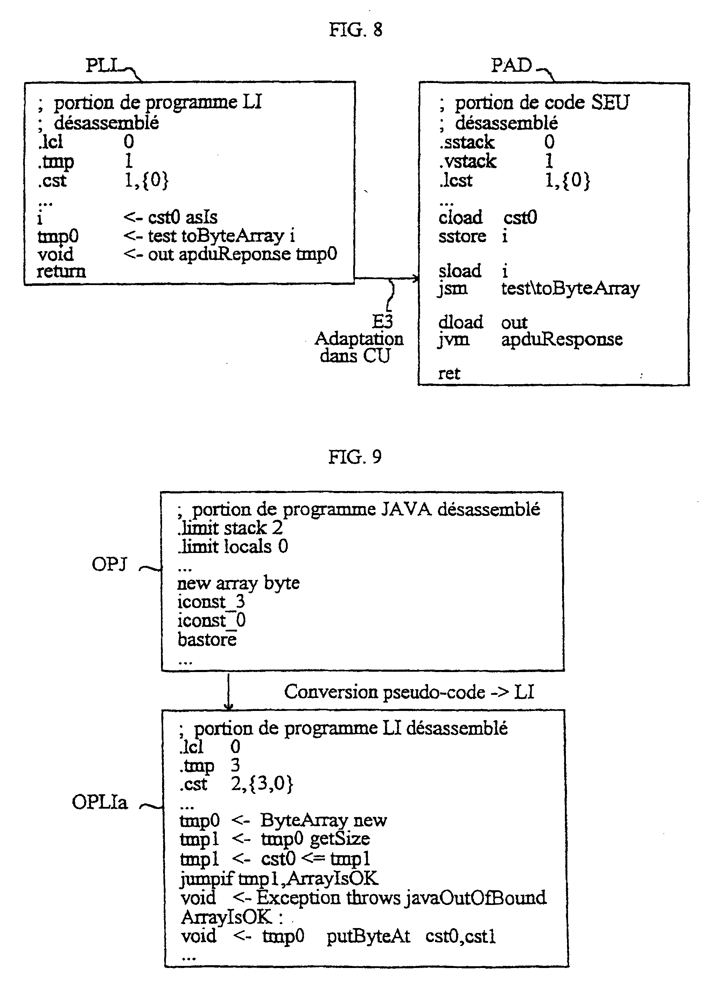

L'étape E3 a pour but de compléter in situ dans la carte, le travail effectué aux étapes E1 et E2, ou à l'étape E12. Le mécanisme de vérification et/ou d'adaptation convertit complètement le code reçu et le transforme en un programme exécutable par le support d'exécution universel SEU dans la carte. Cette conversion a pour but de rendre le code plus efficace en le soumettant statiquement à des contrôles de sécurité qui, lorsqu'ils sont exécutés dynamiquement, pénalisent fortement le temps d'exécution des programmes. En pratique, le mécanisme d'adaptation embarqué dans la carte CU peut effectuer un travail important qui engendre un programme directement exécuté par le support d'exécution SEU, c'est-à-dire le microprocesseur présent dans la carte. La figure 8 illustre un exemple du traitement effectué par le mécanisme d'adaptation à l'étape E3 à partir d'une séquence en langage intermédiaire PLI, analogue à la séquence PJLI, PCLI pour fournir une séquence adaptée PAD.

A **l'étape E4,** le programme en langage intermédiaire LI est installé dans la carte CU qui est destinée à supporter directement le langage intermédiaire LI. La carte CU possède un mécanisme d'adaptation spécifique.

La carte à puce CU qui est programmable, c'est-à-dire qui accueille des programmes tout au long de son cycle de vie, contient le **support d'exécution** SEU dédié au langage intermédiaire LI. Ainsi les programmes P1 à PN écrits dans les divers langages sources LS1 à LSN coexistent au sein de la même carte CU qui n'est pas spécifiquement dédiée à l'un des langages sources LS1 à LSN, mais qui est capable d'héberger différents programmes écrits dans différents langages sources, ce qui résout le sous-problème SP2.

Le support d'exécution universel SEU ne contient qu'un sous-ensemble restreint des supports d'exécution SE1 à SEN des programmes initiaux P1 à PN. L'étape E3 charge des bibliothèques de programmation BPn en même temps que chaque programme en le langage intermédiaire LI afin d'adapter à l'étape E4 le support d'execution universel SEU au langage intermédiaire et ainsi exécuter le programme initial Pn dans le langage intermédiaire. Des propriétés de sécurité spécifiques au langage intermédiaire sont importées "par dessus" celles existantes dans le support d'exécution universel SEU. L'architecture du support d'exécution universel SEU dans la carte CU considère cet aspect pour fournir aux programmes hébergés un environnement efficace en taille mémoire et rapidité d'exécution tout en maintenant les propriétés de sécurité, ce qui résout le sous-problème SP3.

Le support d'exécution universel SEU placé dans la carte CU et supportant l'exécution du langage intermédiaire LI est :
- adaptable pour accepter de nouvelles bibliothèques de programmation pour chaque nouveau langage source supporté afin d'exécuter le programme initialement écrit dans le nouveau langage dans son environnement logiciel ;
- sûr pour supporter les mécanismes de sécurité par contrôle des types manipulés par les programmes ; et également pour accepter la définition de nouveaux types afin de décrire des mécanismes de sécurité associés lors du chargement de nouvelles bibliothèques de programmation.

A l'étape E4, le mécanisme d'interprétation avancé de programme concerne le support d'exécution lui-même. Le support d'exécution SEU logiciel et/ou matériel est utilisé, comme cible pour la génération de chaque programme exécutable, pour répondre aux préoccupations des sous-problèmes SP2 et SP3. De préférence, le support d'exécution SEU comprend un jeu d'instructions différent de celui qu'il exploite initialement. Cette fonction permet dans l'absolu de redéfinir complètement le support d'exécution universel SEU pour qu'il puisse directement interpréter le code issu d'un langage particulier. Le mécanisme d'extension visé à l'étape E4 favorise par exemple des portions de code issues d'un langage donné et permet surtout d'implanter des opérations qui définissent une sémantique différente de celle fournie par le support d'exécution universel SEU initial de la carte CU.

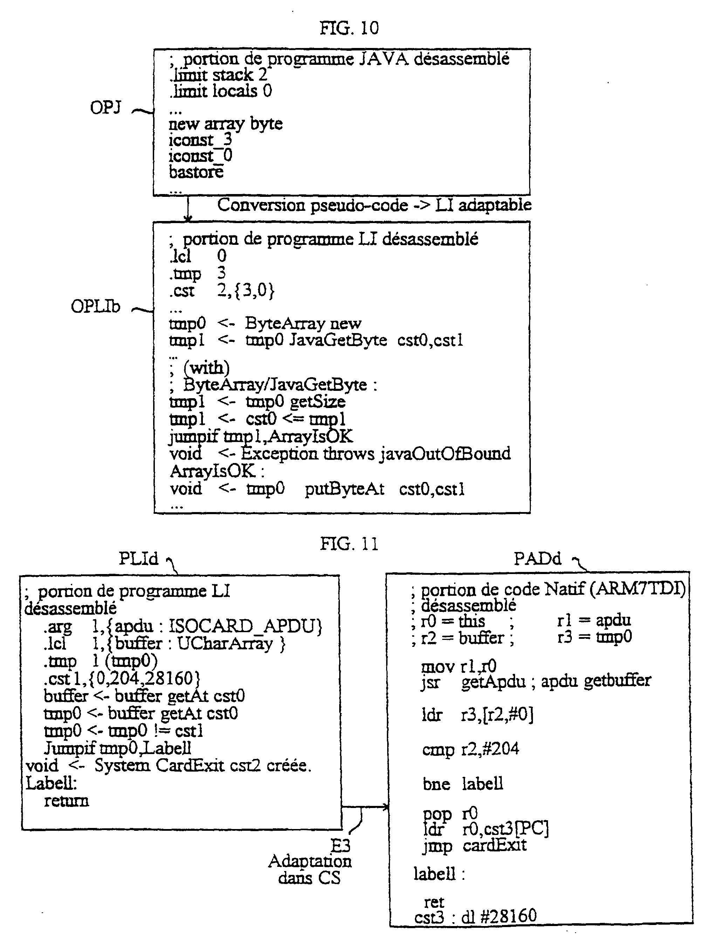

Le mécanisme d'extension est relatif par exemple à une instruction élémentaire d'accès à un tableau, qui en langage JAVA déclenche une exception lorsqu'elle sort des limites du tableau, alors que dans l'implantation initiale du langage intermédiaire LI, l'instruction élémentaire donne accès à une case quelconque du tableau. Une solution simple consiste à transformer une opération OPJ en langage JAVA pour accéder à un tableau en une séquence d'opérations OPLIa en langage intermédiaire LI, sans extension de celui-ci, comme montré à la figure 9. Pour éviter ce grossissement inutile du code et pénalisant dans la carte, une instruction élémentaire qui réalise exactement la sémantique équivalente au pseudo-code (Byte Code) JAVA est définie dans le support d'exécution universel SEU, comme montré aux lignes 7 à 10 dans une séquence d'opérations OPLIb à la figure 10.

Selon une variante de l'invention, les étapes E3 et E4 sont remplacées par des **étapes E3d et E4d** montrées à droite de la figure 5. La cible visée est un support d'exécution spécialisé SES ayant par exemple une architecture matérielle et le cas échéant logicielle connue analogue à l'un des supports d'exécution initiaux SE1 à SEN dédiés au langage source LS1 à LSN.

A l'étape E3d, une chaîne de vérification et de chargement CVCd est enrichie d'un mécanisme d'optimisation OPT qui génère un code final natif efficace qui est optimal à l'extérieur de la carte. Les contraintes de sécurité sont de préférence relâchées puisque les programmes sont produits pour des cartes à puce spécifiques CS une fois pour toute et passent par des contrôles de fiabilité connus du secteur industriel.

La figure 11 montre une adaptation à l'étape E3d entre une séquence PCId en langage intermédiaire LI en une séquence adaptée PAd.

A l'étape E4d, un ensemble de bibliothèques de programmation BPn, BPdn sont portées par le support d'exécution SES pour que le programme issu du programme Pn en langage source LSn fonctionne dans son environnement.

Le support d'exécution SES selon cette variante nécessite la réalisation de M chaînes de vérification et chargement, et donc l'écriture d'une nouvelle chaîne CVC fonction d'un nouveau langage.

Cette variante est moins avantageuse que la réalisation avec support d'exécution "universel" SEU. Le support d'exécution SES demeure tributaire d'un support d'exécution prédéterminé SEn, et l'inadéquation entre la bibliothèque de programmation BPn du langage source LSn et celle attendue pour le support d'exécution SES programmée à l'origine pour un autre langage requiert une capacité de mémoire plus élevée et conduit à moins d'efficacité.

## Revendications

1. Procédé de migration de plusieurs programmes (P1 à PN) écrits respectivement en des langages sources (LS1 à LSN) auxquels des supports d'exécution respectifs (SE1 à SEN) sont dédiés, vers un moyen de traitement de données, **caractérisé en ce qu'**il comprend les étapes de :
- compiler (E1, E2 ; E12) chaque programme (Pn) en un programme respectif exprimé en un langage intermédiaire (LI) représentatif d'un sous-ensemble minimal des langages sources,
- fournir (E4) dans le moyen de traitement de données (CU ; CS) un support d'exécution prédéterminé (SEU ; SES) dédié au langage intermédiaire, et
- charger (E3) le programme respectif en langage intermédiaire dans le moyen de traitement de données avec une bibliothèque de programmation respective (BPn) adaptant le support d'éxecution universel (SEU) au langage intermédiaire (LI) afin d'exécuter le programme en langage intermédiaire dans le support d'exécution prédéterminé (SEU ; SES).

2. Procédé conforme à la revendication 1, dans lequel l'étape de compiler comprend des étapes de :
- compiler le programme (Pn) en un programme compilé (PCn) en un langage machine auquel le support d'exécution respectif (SEn) est dédié, et
- convertir (E2) le programme compilé (PCn) en le programme respectif exprimé en langage intermédiaire (LI).

3. Procédé conforme à la revendication 1 ou 2, comprenant une étape, avant l'étape de charger (E3), pour extraire des informations de validation du programme respectif en langage intermédiaire (LI), et une étape (E3), après l'étape de charger, pour vérifier les informations de validation extraites dans le support d'exécution prédéterminé (SEU, SES).

4. Procédé conforme à l'une quelconque des revendications 1 à 3, dans lequel le support d'exécution prédéterminé (SES) est analogue à l'un des supports d'exécution (SE1 à SEN).

5. Procédé conforme à l'une quelconque des revendications 1 à 4, comprenant une étape de lire des caractéristiques du support d'exécution prédéterminé (SEU; SES) par un serveur (SER) qui ensuite effectue l'étape de compiler (E1, E2 ; E12).

6. Procédé conforme à l'une quelconque des revendications 1 à 5, dans lequel le moyen de traitement de données est une carte à puce (CU, CS).

7. Procédé conforme à la revendication 6, dans lequel la carte à puce est une carte d'identité d'abonné incluse dans un terminal radiotéléphonique mobile (TE).

## Patentansprüche

1. Migrationsverfahren zu einem Datenverarbeitungsmittel mehrerer jeweils in Quellensprachen (LS1 bis LSN) geschriebener Programme (P1 bis PN), denen jeweils Ausführungsträger (SE1 bis SEN) gewidmet sind, **dadurch gekennzeichnet, dass** es die folgenden Etappen umfasst:
- Kompilation (E1, E2; E12) eines jeden Programms (Pn) zu einem jeweiligen Programm, das in einer für eine minimale Untereinheit der Quellensprachen repräsentativen Zwischensprache (LI) ausgedrückt ist,
- Bereitstellung (E4) im Datenverarbeitungsmittel (CU; CS) eines vorbestimmten, der Zwischensprache gewidmeten Ausführungsträgers (SEU; SES), und
- Laden (E3) des jeweiligen Programms in Zwischensprache in das Datenverarbeitungsmittel mit einer jeweiligen Programmierungsbibliothek (BPn), die den universalen Ausführungsträger (SEU) der Zwischensprache (LI) anpasst, um das Programm in Zwischensprache in dem vorbestimmten Ausführungsträger (SEU; SES) auszuführen.

2. Verfahren nach Anspruch 1, bei dem die Kompilationsetappe die folgenden Etappen umfasst:
- Kompilation des Programms (Pn) zu einem in eine Maschinensprache kompilierten Programm (PCn), dem der jeweilige Ausführungsträger (SEn) gewidmet ist, und
- Umwandlung (E2) des kompilierten Programms (PCn) in das jeweilige in Zwischensprache (LI) ausgedrückte Programm.

3. Verfahren nach Anspruch 1 oder 2, mit vor der Ladeetappe (E3) einer Etappe, um dem jeweiligen Programm in Zwischensprache (LI) Bestätigungsinformationen zu entnehmen, und mit nach der Ladeetappe einer Etappe (E3), um in dem vorbestimmten Ausführungsträger (SEU, SES) die entnommenen Bestätigungsinformationen zu prüfen.

4. Verfahren nach einem der Ansprüche 1 bis 3, bei dem der vorbestimmte Ausführungsträger (SES) analog zu einem der Ausführungsträger (SE1 bis SEN) ist.

5. Verfahren nach einem der Ansprüche 1 bis 4, mit einer Leseetappe der Merkmale des vorbestimmten Ausführungsträgers (SEU; SES) durch einen Server (SER), der danach die Kompilationsetappe (E1, E2; E12) durchführt.

6. Verfahren nach einem der Ansprüche 1 bis 5, bei dem das Datenverarbeitungsmittel eine Chipkarte (CU, CS) ist.

7. Verfahren nach Anspruch 6, bei dem die Chipkarte ein Teilnehmerausweis eines mobilen Funktelefonendgeräts (TE) ist.

## Claims

1. A method of migration of several programs (P1 to PN) written respectively in source languages (LS1 to LSN) to which respective execution media (SE1 to SEN) are dedicated, to a data processing means, **characterised in that** it comprises the steps of:
- compiling (E1, E2; E12) each program (Pn) as a respective program expressed as an intermediate language (LI) representing a minimum subset of the source languages,
- providing (E4) in the data processing means (CU; CS) a predetermined execution medium (SEU; SES) dedicated to the intermediate language, and
- loading (E3) the respective program as an intermediate language in the data processing means with a respective programming library (BPn) adapting the universal execution medium (SEU) to the intermediate language (LI) in order to execute the program as an intermediate language in the predetermined execution medium (SEU; SES).

2. A method according to Claim 1, in which the compiling step comprises the steps of:
- compiling the program (Pn) as a program (PCn) compiled in a machine language to which the respective execution medium (SEn) is dedicated, and
- converting (E2) the compiled program (PCn) into the respective program expressed in an intermediate language (LI).

3. A method according to Claim 1 or 2, comprising a step, before the loading step (E3), for extracting validation information from the respective program in intermediate language (LI), and a step (E3), after the loading step, for verifying the validation information extracted from the predetermined execution medium (SEU, SES).

4. A method according to any one of Claims 1 to 3, in which the predetermined execution medium (SES) is similar to one of the execution media (SE1 to SEN).

5. A method according to any one of Claims 1 to 4, comprising a step of reading characteristics of the predetermined execution medium (SEU; SES) by means of a server (SER) which then performs the compiling step (E1, E2; E12).

6. A method according to any one of Claims 1 to 5, in which the data processing means is a smart card (CU, CS).

7. A method according to Claim 6, in which the smart card is a subscriber identity card included in a mobile telephone terminal (TE).
